# EUROPEAN PATENT SPECIFICATION

(11) **EP 4 175 369 B1**
(45) Date of publication and mention of the grant of the patent: **31.12.2025**
(21) Application number: 21850169.0
(22) Date of filing: 29.07.2021
(51) Int. Cl.: H04W 52/02, H04W 76/28, H04W 76/14, H04W 76/27, H04W 4/40

(54) **METHOD AND DEVICE FOR PERFORMING DRX OPERATION FOR EACH POWER-SAVE MODE IN NR V2X**
VERFAHREN UND VORRICHTUNG ZUR DURCHFÜHRUNG EINES DRX-BETRIEBS FÜR JEDEN ENERGIESPARMODUS IN NR V2X
PROCÉDÉ ET DISPOSITIF D'EXÉCUTION D'UNE OPÉRATION DE DRX POUR CHAQUE MODE D'ÉCONOMIE D'ÉNERGIE EN NR V2X

(30) Priority: 29.07.2020 US 202063058474 P; 03.08.2020 KR 20200096806; 15.10.2020 KR 20200133614
(43) Date of publication of application: 03.05.2023
(73) Proprietor: LG ELECTRONICS INC., Yeongdeungpo-gu Seoul 07336 (KR)
(72) Inventor: PARK, Giwon, Seoul 06772 (KR); BACK, Seoyoung, Seoul 06772 (KR); HONG, Jongwoo, Seoul 06772 (KR)
(74) Representative: Frenkel, Matthias Alexander
(86) International application number: PCT/KR2021/009923
(87) International publication number: WO 2022/025682

(56) References cited:
- EP-A1- 3 499 975
- EP-A1- 3 499 975
- WO-A1-2017/078783
- WO-A1-2018/016882
- KR-A- 20190 039 101
- HUAWEI ET AL: "Some considerations about DRX on PC5", vol. RAN WG2, no. Hangzhou, China; 20170515 - 20170519, 14 May 2017 (2017-05-14), XP051275256, Retrieved from the Internet <URL:http://www.3gpp.org/ftp/Meetings_3GPP_SYNC/RAN2/Docs/> [retrieved on 20170514]
- "3rd Generation Partnership Project; Technical Specification Group Services and System Aspects; Study on architecture enhancements for 3GPP support of advanced Vehicle-to-Everything (V2X) services; Phase 2 (Release 17)", 3GPP STANDARD; TECHNICAL REPORT; 3GPP TR 23.776, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.1.0, 15 June 2020 (2020-06-15), Mobile Competence Centre ; 650, route des Lucioles ; F-06921 Sophia-Antipolis Cedex ; France , pages 1 - 11, XP051894090
- LG ELECTRONICS INC. (RAPPORTEUR): "Report of [Post109bis-e][957][V2X]: MAC issues (LG)", 3GPP DRAFT; R2-2005720, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20200601 - 20200612, 29 May 2020 (2020-05-29), Mobile Competence Centre ; 650, route des Lucioles ; F-06921 Sophia-Antipolis Cedex ; France , XP051892161

## Description

### TECHNICAL FIELD

This disclosure relates to a wireless communication system.

### BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

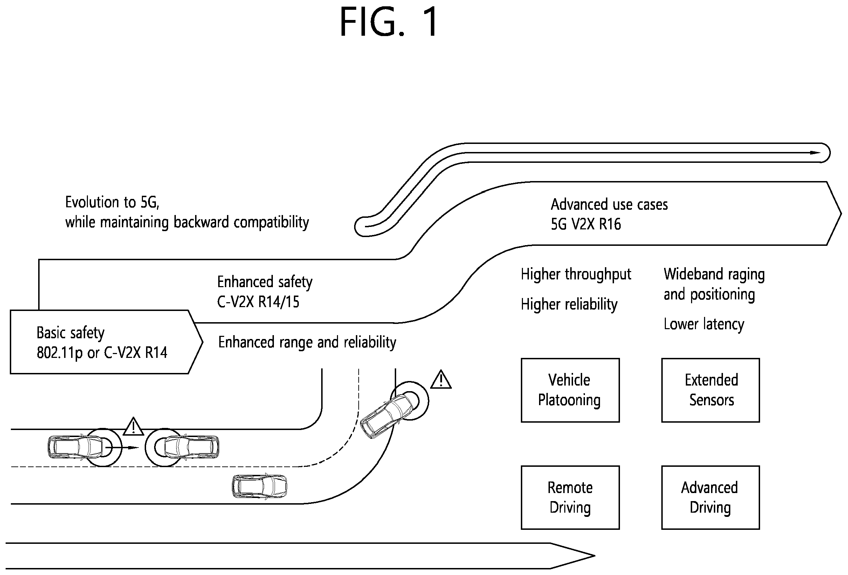

FIG. 1 is a drawing for describing V2X communication based on NR, compared to V2X communication based on RAT used before NR. The embodiment of FIG. 1 may be combined with various embodiments of the present disclosure.

Regarding V2X communication, a scheme of providing a safety service, based on a V2X message such as Basic Safety Message (BSM), Cooperative Awareness Message (CAM), and Decentralized Environmental Notification Message (DENM) is focused in the discussion on the RAT used before the NR. The V2X message may include position information, dynamic information, attribute information, or the like. For example, a UE may transmit a periodic message type CAM and/or an event triggered message type DENM to another UE.

Thereafter, regarding V2X communication, various V2X scenarios are proposed in NR. For example, the various V2X scenarios may include vehicle platooning, advanced driving, extended sensors, remote driving, or the like.

Prior art is found in WO 2017/078783 A1 which generally relates to methods and devices for communication via sidelink and in EP 3 499 975 A1 which generally relates to an information processing method and apparatus, UE, base station, and storage medium. Another prior art example is disclosed in HUAWEI ET AL: "Some considerations about DRX on PC5",3GPP DRAFT; R2-1704718.

### SUMMARY

The invention is set out in the independent claims. preferred embodiments of the invention are set out in the dependent claims.

In one embodiment, a method of operating a first device 100 in a wireless communication system according to claim 1 is proposed.

The user equipment (UE) can efficiently perform SL communication.

### BRIEF DESCRIPTION OF THE DRAWINGS

FIG. 1 is a drawing for describing V2X communication based on NR, compared to V2X communication based on RAT used before NR.
FIG. 2 shows a structure of an NR system, based on an embodiment of the present disclosure.
FIG. 3 shows a radio protocol architecture, based on an embodiment of the present disclosure.
FIG. 4 shows a structure of a radio frame of an NR, based on an embodiment of the present disclosure.
FIG. 5 shows a structure of a slot of an NR frame, based on an embodiment of the present disclosure.
FIG. 6 shows an example of a BWP, based on an embodiment of the present disclosure.
FIG. 7 shows a UE performing V2X or SL communication, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows a procedure for UE 1 and UE 2 to perform a sidelink DRX operation in PC5 Idle mode according to an embodiment of the present disclosure.
FIG. 11 shows a procedure for UE 1 and UE 2 to perform a sidelink DRX operation in PC5 active mode according to an embodiment of the present disclosure.
FIG. 12 shows a procedure in which UE 1 and UE 2 switch power saving modes from PC5 active mode to PC5 idle mode according to an embodiment of the present disclosure.
FIG. 13 shows a procedure for performing wireless communication by a first device according to an embodiment of the present disclosure.
FIG. 14 shows a procedure for a second device to perform wireless communication according to an embodiment of the present disclosure.
FIG. 15 shows a communication system 1, based on an embodiment of the present disclosure.
FIG. 16 shows wireless devices, based on an embodiment of the present disclosure.
FIG. 17 shows a signal process circuit for a transmission signal, based on an embodiment of the present disclosure.
FIG. 18 shows another example of a wireless device, based on an embodiment of the present disclosure.
FIG. 19 shows a hand-held device, based on an embodiment of the present disclosure.
FIG. 20 shows a vehicle or an autonomous vehicle, based on an embodiment of the present disclosure.

### DESCRIPTION OF EXEMPLARY EMBODIMENTS

In the present specification, "A or B" may mean "only A", "only B" or "both A and B." In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

A technical feature described individually in one figure in the present specification may be individually implemented, or may be simultaneously implemented.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

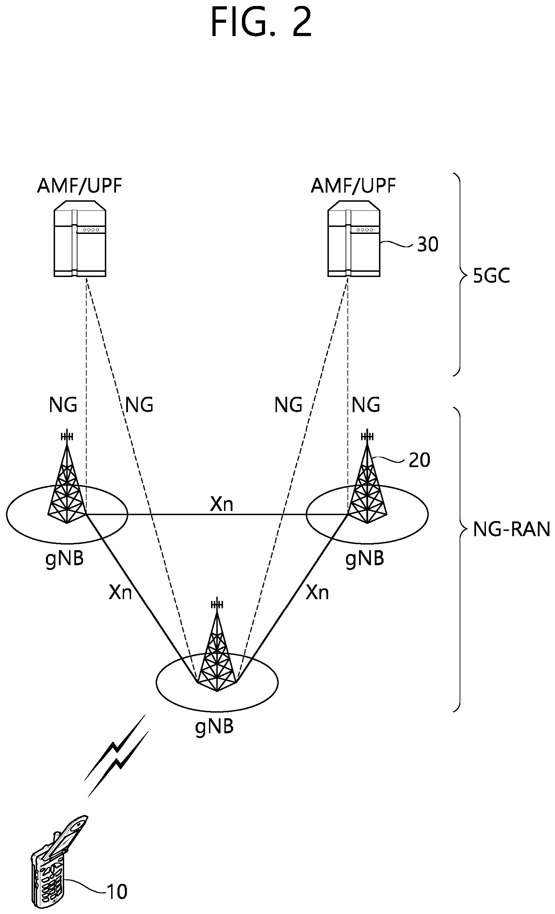

FIG. 2 shows a structure of an NR system, based on an embodiment of the present disclosure. The embodiment of FIG. 2 may be combined with various embodiments of the present disclosure.

Referring to FIG. 2, a next generation-radio access network (NG-RAN) may include a BS 20 providing a UE 10 with a user plane and control plane protocol release. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 2 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

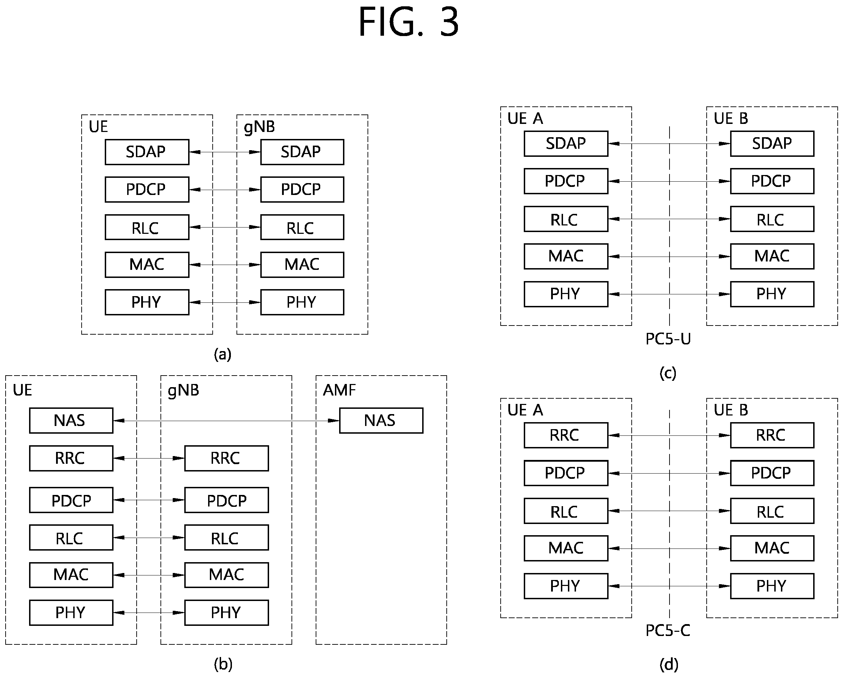

FIG. 3 shows a radio protocol architecture, based on an embodiment of the present disclosure. The embodiment of FIG. 3 may be combined with various embodiments of the present disclosure. Specifically, (a) of FIG. 3 shows a radio protocol stack of a user plane for Uu communication, and (b) of FIG. 3 shows a radio protocol stack of a control plane for Uu communication. (c) of FIG. 3 shows a radio protocol stack of a user plane for SL communication, and (d) of FIG. 3 shows a radio protocol stack of a control plane for SL communication.

Referring to FIG. 3, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

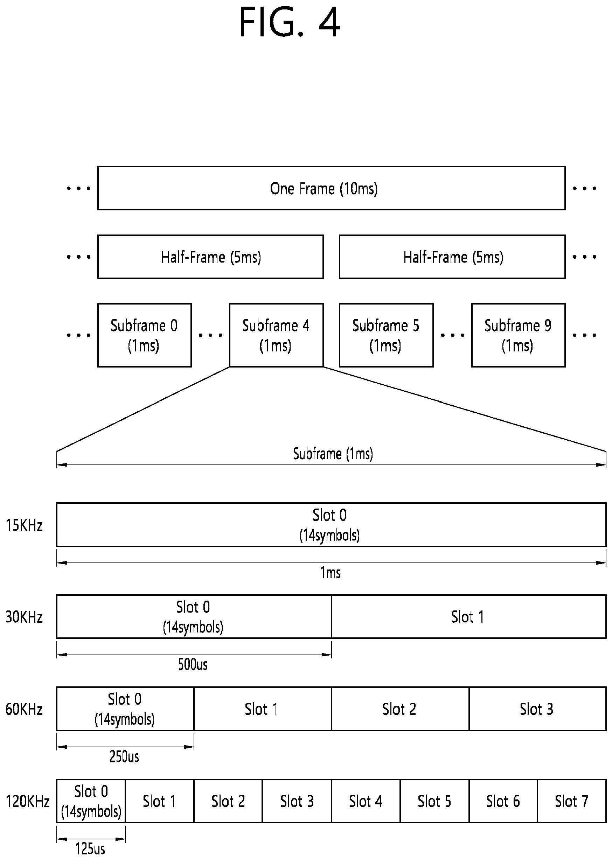

FIG. 4 shows a structure of a radio frame of an NR, based on an embodiment of the present disclosure. The embodiment of FIG. 4 may be combined with various embodiments of the present disclosure.

Referring to FIG. 4, in the NR, a radio frame may be used for performing uplink and downlink transmission. A radio frame has a length of 10ms and may be defined to be configured of two half-frames (HFs). Ahalf-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u} ₛₗₒₜ), and a number of slots per subframe (N^{subframe,u} ₛₗₒₜ) based on an SCS configuration (u), in a case where a normal CP is used.

**[Table 1]**

| SCS (15*2^{u}) | N^{slot}_{symb} | ^{Nframe,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

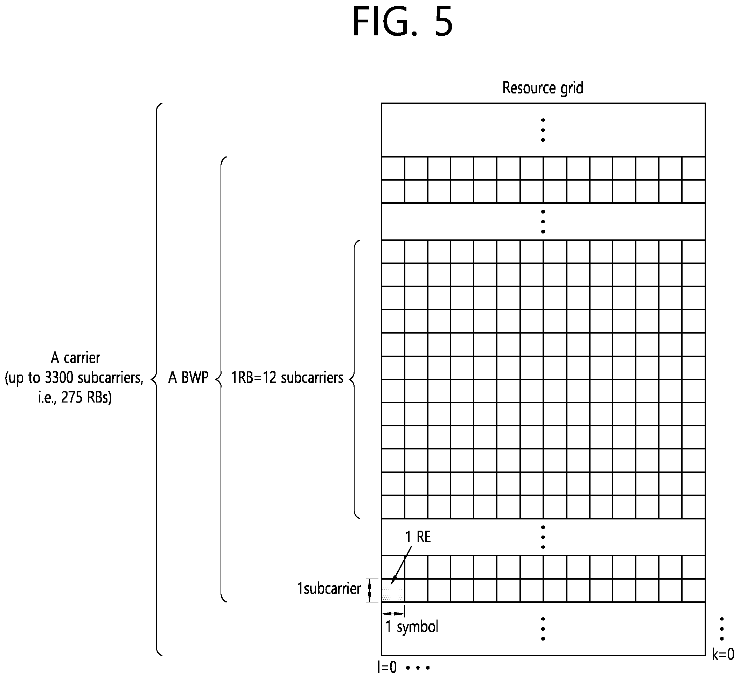

FIG. 5 shows a structure of a slot of an NR frame, based on an embodiment of the present disclosure. The embodiment of FIG. 5 may be combined with various embodiments of the present disclosure.

Referring to FIG. 5, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

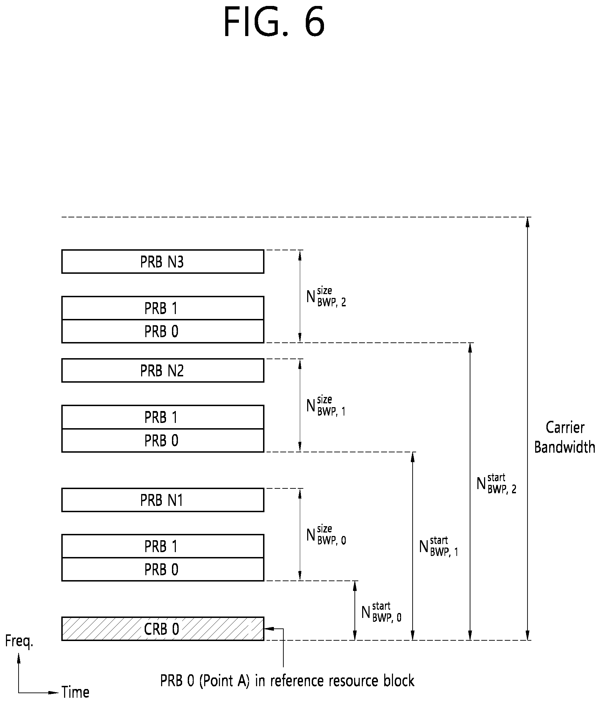

FIG. 6 shows an example of a BWP, based on an embodiment of the present disclosure. The embodiment of FIG. 6 may be combined with various embodiments of the present disclosure. It is assumed in the embodiment of FIG. 6 that the number of BWPs is 3.

Referring to FIG. 6, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

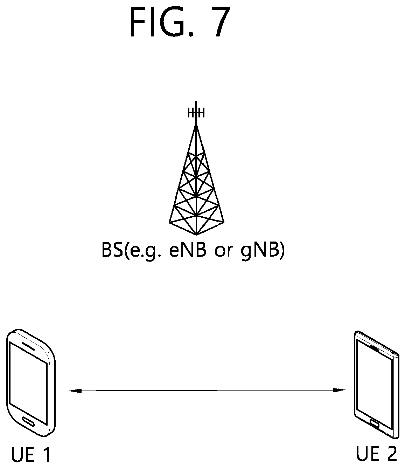

FIG. 7 shows a UE performing V2X or SL communication, based on an embodiment of the present disclosure. The embodiment of FIG. 7 may be combined with various embodiments of the present disclosure.

Referring to FIG. 7, in V2X or SL communication, the term 'UE' may generally imply a UE of a user. However, if a network equipment such as a BS transmits/receives a signal according to a communication scheme between UEs, the BS may also be regarded as a sort of the UE. For example, a UE 1 may be a first apparatus 100, and a UE 2 may be a second apparatus 200.

For example, the UE 1 may select a resource unit corresponding to a specific resource in a resource pool which implies a set of series of resources. In addition, the UE 1 may transmit an SL signal by using the resource unit. For example, a resource pool in which the UE 1 is capable of transmitting a signal may be configured to the UE 2 which is a receiving UE, and the signal of the UE 1 may be detected in the resource pool.

Herein, if the UE 1 is within a connectivity range of the BS, the BS may inform the UE 1 of the resource pool. Otherwise, if the UE 1 is out of the connectivity range of the BS, another UE may inform the UE 1 of the resource pool, or the UE 1 may use a pre-configured resource pool.

In general, the resource pool may be configured in unit of a plurality of resources, and each UE may select a unit of one or a plurality of resources to use it in SL signal transmission thereof.

Hereinafter, resource allocation in SL will be described.

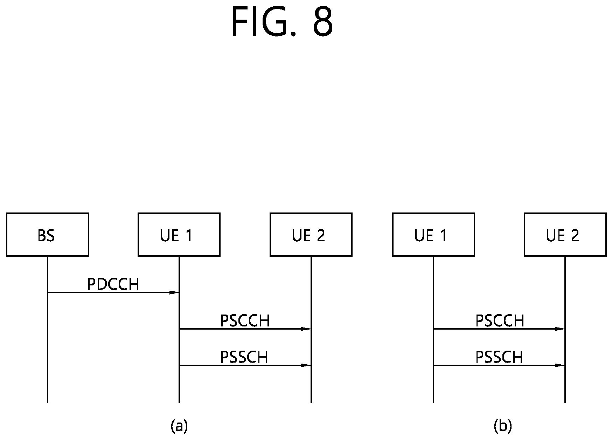

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to common SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a BS may schedule an SL resource to be used by the UE for SL transmission. For example, the BS may perform resource scheduling to a UE 1 through a PDCCH (e.g., downlink control information (DCI)) or RRC signaling (e.g., Configured Grant Type 1 or Configured Grant Type 2), and the UE 1 may perform V2X or SL communication with respect to a UE 2 according to the resource scheduling. For example, the UE 1 may transmit a sidelink control information (SCI) to the UE 2 through a physical sidelink control channel (PSCCH), and thereafter transmit data based on the SCI to the UE 2 through a physical sidelink shared channel (PSSCH).

Referring to (b) of FIG. 8, in the LTE transmission mode 2, the LTE transmission mode 4, or the NR resource allocation mode 2, the UE may determine an SL transmission resource within an SL resource configured by a BS/network or a pre-configured SL resource. For example, the configured SL resource or the pre-configured SL resource may be a resource pool. For example, the UE may autonomously select or schedule a resource for SL transmission. For example, the UE may perform SL communication by autonomously selecting a resource within a configured resource pool. For example, the UE may autonomously select a resource within a selective window by performing a sensing and resource (re)selection procedure. For example, the sensing may be performed in unit of subchannels. In addition, the UE 1 which has autonomously selected the resource within the resource pool may transmit the SCI to the UE 2 through a PSCCH, and thereafter may transmit data based on the SCI to the UE 2 through a PSSCH.

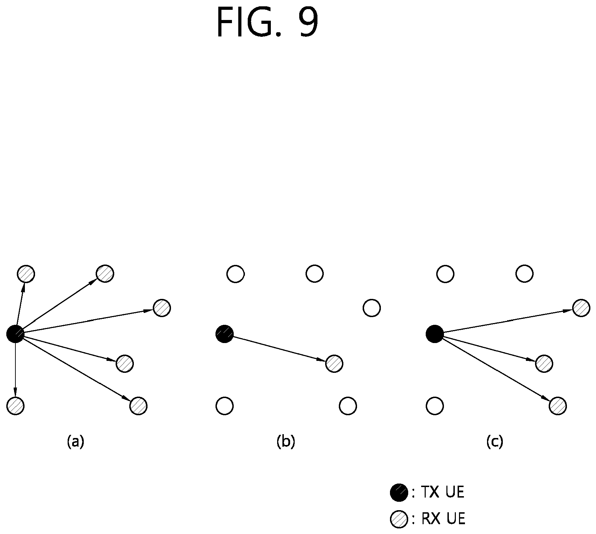

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Meanwhile, in NR V2X of Release 16, power saving operation of a UE was not supported, and, the power saving operation of a UE will be supported from Release 17 NR V2X.

In addition, in NR V2X, unicast link configuration between UEs is supported. For example, a PC5 unicast link can be established for sidelink transmission/reception between UE #A and UE #B, when a PC5 unicast link is established, the UE #A and the UE #B can exchange PC5 RRC messages. Also, for example, the UE #A and the UE #B can establish a PC5 RRC connection to exchange UE capability information and sidelink radio bearer information.

For example, in order to save power of a UE, a power saving operation in a state in which a PC5 unicast link is established and in a state in which it is not established may be defined differently. That is, when sidelink communication between UEs is continuously performed, since message transmission/reception between UEs frequently occurs, when configuring sidelink discontinuous reception (DRX) configurations, it may be necessary to configure sidelink DRX configurations so that a UE can wake up frequently. For example, a short sidelink DRX configuration can be set so that a UE can wake up frequently. The short sidelink DRX configuration may include a short sidelink DRX cycle and a short sleep duration. Conversely, for example, when sidelink communication between UEs is rarely performed, since message transmission/reception between UEs does not occur frequently, when configuring a sidelink DRX configuration, the sidelink DRX configuration may be configured to wake up once in a long cycle. For example, a long sidelink DRX configuration may be set so that a UE wakes up once in a long period. For example, the long sidelink DRX configuration may include a long sidelink DRX cycle and a long sleep time. Through this, it is necessary to maximize the power saving effect of a UE.

Therefore, in the present disclosure, a method for allowing a UE supporting a power saving operation (e.g., sidelink DRX) to perform a power saving operation differently according to whether the UE continuously performs sidelink communication between UEs is proposed.

In the present disclosure, two types of power saving modes are proposed through proposals 1 and 2, and an operation of a UE in each of the proposed power saving modes is also proposed.

### Proposal 1.

According to an embodiment of the present disclosure, a power saving mode, PC5 Idle mode, is newly defined, and a sidelink DRX operation procedure in the PC5 Idle mode is also defined as follows.

### PC5 Idle mode

According to an embodiment of the present disclosure, a state in which PC5 unicast link (and/or PC5 RRC connection) for sidelink communication between UEs is not established is defined as PC5 Idle mode. That is, the PC5 Idle mode may be a state in which there is no sidelink data to be continuously (or periodically) transmitted/received between UEs. Accordingly, by allowing a UE supporting power saving operation (e.g. sidelink DRX) in PC5 Idle mode to wake up periodically and monitor whether there is a sidelink signal (e.g., PSCCH) or sidelink data (e.g., PSBCH, PSSCH) transmitted to it by neighboring UEs, power consumption can be reduced. Therefore, in the present disclosure, a PC5 Idle mode-specific sidelink DRX configuration used by a UE to perform sidelink DRX operation in PC5 Idle mode is defined as follows. For example, the sidelink DRX operation may include an operation in which a UE wakes up in a sidelink DRX on-duration interval and receives sidelink signals or sidelink data from neighboring UEs, and an operation in which a UE transitions from a sidelink DRX off-duration to a sleep mode to reduce power consumption.

In the present disclosure, a power saving mode of a UE that has not established a PC5 unicast link (and/or PC5 RRC connection) is mainly defined as PC5 Idle mode, and described, but the PC5 Idle mode described in this disclosure can be extended and applied to a power saving mode of a UE that has established a PC5 unicast link (and/or a PC5 RRC connection). That is, even a UE that has established a PC5 unicast link (and/or a PC5 RRC connection) may perform a Sidelink DRX operation using PC5 Idle mode specific sidelink DRX configuration for PC5 Idle mode. That is, for example, even when a PC5 unicast link is established, the power saving mode can be initiated as the PC5 Idle mode, or when the power saving mode is operating in PC5 active mode, an operation of switching to PC5 idle mode may be possible without disconnecting the PC5 unicast link. For example, the aforementioned feature may refer to the *SidelinkDRXReconfiguration* message of proposal 2.

### PC5 Idle mode specific sidelink DRX configuration

According to an embodiment of the present disclosure, a sidelink DRX operation of waking up on sidelink on-duration in PC5 idle mode and receiving a sidelink signal according to PC5 Idle mode specific sidelink DRX configuration can be applied only when there is no sidelink data to be continuously (or periodically) received. That is, a sidelink on-duration operation in PC5 idle mode may be a sidelink DRX operation for the purpose of checking whether there is a sidelink signal transmitted to itself by a neighboring UE. Therefore, for example, the period of sidelink DRX on-duration used by a UE in PC5 Idle mode can be set to be (relatively) long. That is, a sidelink DRX configuration used by a UE in PC5 Idle mode may be configured as a long sidelink DRX configuration. For example, in a long sidelink DRX configuration, the period of a DRX on-duration (e.g., awake mode) interval is set long, and the long sidelink DRX configuration may include a configuration in which a DRX off-duration (e.g., sleep mode) interval that exists until the next DRX on-duration is set to be long.

On the other hand, for example, a sidelink DRX configuration used by a UE in PC5 Idle mode may be configured as a short sidelink DRX configuration in another method. For example, the short sidelink DRX configuration may include a configuration in which a DRX on-duration interval is set short and a DRX off-duration interval that exists until the next DRX on-duration is set short.

According to an embodiment of the present disclosure, a feature in which sidelink DRX configuration used by UEs in PC5 idle mode is mapped to a specific region where a UE is located is proposed. That is, for example, a sidelink DRX configuration may be mapped for each zone area, and a UE may cache a sidelink DRX configuration information mapped for each zone ID. Therefore, if a UE knows only the zone ID of the zone in which it is located, it can infer the sidelink DRX configuration mapped with the zone ID. For example, UEs (TX UEs or RX UEs) in PC5 Idle mode may use a sidelink DRX configuration mapped with their own zone ID as a default.

For example, the zone-based sidelink DRX configuration proposed in this disclosure is only one embodiment of sidelink DRX configuration used by UEs in PC5 Idle mode, a variety of other methods can be provided for long sidelink DRX configuration used in PC5 Idle mode. For example, a base station may transmit PC5 Idle mode specific sidelink DRX configuration to a UE in PC5 Idle mode through an SIB. For example, the PC5 Idle mode specific sidelink DRX configuration may include a long sidelink DRX cycle, sidelink on-duration interval, sidelink on-duration start offset, and the like.

According to an embodiment of the present disclosure, a zone-based common sidelink DRX configuration that can be used by a UE in PC5 Idle mode is defined. For example, in a zone-based sidelink DRX configuration, a UE itself can infer sidelink DRX configuration that matches its own zone ID. On the other hand, for example, if it is not, i.e. if a UE does not pre-configure a sidelink DRX configuration, the UE may obtain PC5 Idle mode specific sidelink DRX configuration from a base station. For example, the UE may obtain the PC5 Idle mode specific sidelink DRX configuration through a dedicated RRC message or SIB.

According to an embodiment of the present disclosure, a default/common sidelink DRX configuration that PC5 Idle mode UEs that do not have a PC5 unicast link can use in common are defined. For example, the default/common sidelink DRX configuration may include a sidelink DRX period, a time duration of sidelink on-duration, a start offset of sidelink DRX on-duration, and a sidelink DRX operation timer. For example, a default/common sidelink DRX configuration may be configured based on service or QoS information of a UE from a base station and transmitted to the UE. The default/common sidelink DRX configuration may be delivered to a UE through SIB and/or a dedicated RRC message. In addition, a UE may transmit a default/common sidelink DRX configuration to a neighboring UE through a PC5 RRC message. For example, PC5 idle mode UEs that do not establish a PC5 unicast link can perform sidelink DRX operations based on a default/common sidelink DRX configuration. For example, the sidelink DRX operation may include on-duration operation: sidelink data reception/transmission, off-duration operation: sleep mode operation after the on-duration expires.

### Sidelink DRX operation

According to an embodiment of the present disclosure, a sidelink DRX operation of a UE in PC5 Idle mode may be defined as follows.

According to an embodiment of the present disclosure, PC5 Idle UEs that have capabilities for sidelink communication and sidelink DRX operation, and have not yet established a PC5 unicast link or PC5 RRC connection with a peer UE may use aforementioned PC5 Idle mode specific sidelink DRX configuration for a sidelink DRX operation. That is, a UE in PC5 Idle mode can check a PC5 Idle mode specific sidelink DRX configuration and may monitor a sidelink signal of neighboring UEs at the start of the sidelink DRX on-duration interval. In addition, a UE can reduce power consumption by operating in a sleep mode in a period other than the sidelink DRX on-duration interval (e.g., sidelink DRX off-duration). Thereafter, a UE wakes up in a DRX on-duration interval of the next sidelink DRX cycle and can monitor sidelink signals of neighboring UEs. For example, when a UE in PC5 Idle mode receives sidelink signals from neighboring UEs in PC5 Idle mode-specific sidelink DRX on-duration and continuous transmission/reception of sidelink messages is required, UEs in PC5 Idle mode may establish PC5 unicast links (and/or PC5 RRC connections) with each other. For example, a UE in PC5 Idle mode can transition to PC5 active mode and negotiate PC5 active mode specific sidelink DRX configuration while exchanging PC5 RRC messages (*SidelinkDRXReconfiguration* message, *SidelinkDRXReconfigurationComplete* message) of proposal 2. Thereafter, a UE in PC5 Idle mode may transition to PC5 active mode and may perform a sidelink DRX operation using a PC5 active mode specific sidelink DRX configuration.

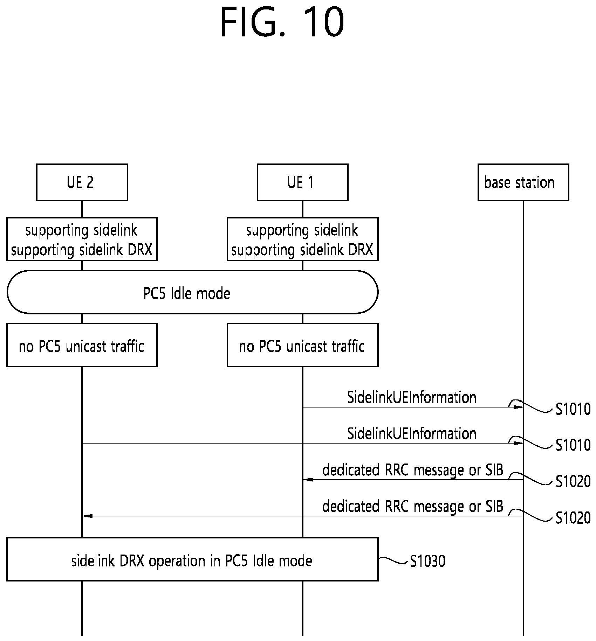

FIG. 10 shows a procedure for UE 1 and UE 2 to perform a sidelink DRX operation in PC5 Idle mode according to an embodiment of the present disclosure. The embodiment of FIG. 10 may be combined with various embodiments of the present disclosure.

For example, FIG. 10 may show an embodiment of a sidelink operation of UEs in PC5 Idle mode. Referring to FIG. 10, for example, UE 1 and/or UE 2 may support sidelink communication and support sidelink DRX operation. For example, the default operation mode for sidelink communication of the UE 1 and/or the UE 2 may be PC5 Idle mode. For example, in this embodiment, the UE 1 and/or the UE 2 may start in PC5 Idle mode. For example, in this embodiment, the UE 1 and/or the UE 2 do not have traffic for sidelink communication with neighboring UEs, or even if there is traffic for sidelink communication in the UE 1 and/or the UE 2, only sidelink traffic related to groupcast/broadcast may exist. For example, the groupcast/broadcast may be communication transmitted/received/broadcasted once in a while. That is, for example, the UE 1 and/or the UE 2 may not establish a PC5 unicast link or a PC5 RRC connection with the other UE. For example, the counterpart UE may be a peer UE. Also, for example, there may be no unicast sidelink data related to sidelink communication with the neighboring UE.

In step S1010, if the UE 1 and/or the UE 2 are interested in transmitting/receiving sidelink data, they may include sidelink-related information in the *SidelinkUEInformation* message and deliver it to a base station. For example, the sidelink-related information may include frequency information on which sidelink communication is performed, QoS information for sidelink data when there is sidelink traffic, sidelink DRX configuration generated by UE 1 itself, and/or sidelink capability information. For example, the sidelink DRX configuration may include PC5 Idle mode specific sidelink DRX configuration generated in a V2X layer and delivered to an AS layer and/or PC5 Idle mode specific sidelink DRX configuration matched (or mapped) based on the zone. For example, the sidelink capability information may include whether a sidelink DRX operation is supported and/or whether a sidelink HARQ operation is supported.

In step S1020, the base station may deliver PC5 Idle mode specific sidelink DRX configuration information to the UE 1 and/or the UE 2, referring to the sidelink-related information of the UE 1 and/or the UE 2 included in the *SidelinkUEInformation* message received from the UE 1 and/or the UE 2. For example, the PC5 Idle mode specific sidelink DRX configuration information may be delivered through SIB and/or a dedicated RRC message. For example, the PC5 idle mode specific sidelink DRX configuration information may be different from the sidelink DRX configuration generated by the UE 1 and/or the UE 2 itself. For example, when the UE 1 and/or the UE 2 do not receive PC5 Idle mode specific sidelink DRX configuration information from the base station, the UE 1 and/or the UE 2 may use the PC5 idle mode specific sidelink DRX configuration generated by itself.

In step S1030, the UE 1 and/or the UE 2 may perform sidelink DRX operation in PC5 Idle mode using PC5 Idle mode specific sidelink DRX configuration information configured by the base station or configured by itself.

### Proposal 2.

According to an embodiment of the present disclosure, PC5 active mode, which is a power saving mode, is newly defined, and a sidelink DRX operation procedure in PC5 active mode is also defined as follows.

### PC5 active mode

In the present disclosure, a power saving mode in which a UE establishes a PC5 unicast link and a PC5 RRC connection with another UE and performs legitimate sidelink transmission/reception is defined as the PC5 active mode.

### PC5 active mode specific sidelink DRX configuration

For example, when an RX UE receives something from another UE in the sidelink DRX on-duration interval and legitimate transmission and reception proceeds, sidelink DRX configuration of an RX UE may need to be reconfigured specifically for the RX UE, or may need to be reconfigured specifically for QoS requirements of sidelink data (or sidelink service). For example, the QoS requirements of the sidelink data may include a packet delay budget or latency requirement.

For example, while PC5 Idle-specific sidelink DRX configuration used by UEs in PC5 Idle mode is a long sidelink DRX configuration commonly used by all UEs supporting sidelink communication to monitor sidelink signals of neighboring UEs, PC5 active mode specific sidelink DRX configuration may be a sidelink DRX configuration that is set to meet the QoS requirements of sidelink data (or sidelink service) to support continuous sidelink transmission/reception between TX UE and RX UE. For example, the QoS requirements of the sidelink data may include PC5 5QI (PQI) or PC5 QoS Flow Identifier (PFI). For example, the QoS requirements may include packet delay budget and/or delay requirements among PQI items. For example, PC5 active mode specific sidelink DRX configuration may be configured as a short sidelink DRX configuration having a shorter cycle than PC5 idle mode specific sidelink DRX configuration. For example, the short sidelink DRX configuration may include a short sidelink DRX period, a time duration of sidelink on-duration, a start offset of sidelink DRX on-duration, and the like.

According to an embodiment of the present disclosure, a PC5 active mode specific sidelink DRX configuration may be configured as a long sidelink DRX configuration having a longer cycle than a PC5 Idle mode specific sidelink DRX configuration. For example, the long sidelink DRX configuration may include a long sidelink DRX period, a time duration of long sidelink on-duration, a start offset of sidelink DRX on-duration, and the like. That is, a PC5 active mode specific sidelink DRX configuration may be configured that the DRX on-duration (e.g., awake mode) interval is long, and also the DRX off-duration (e.g., sleep mode) interval that exists until the next DRX on-duration comes is long.

According to an embodiment of the present disclosure, a PC5 RRC message is proposed for the purpose of exchanging and negotiating configuration parameters necessary for UEs supporting sidelink power saving operation to perform power saving mode operation.

### SidelinkDRXReconfiguration message

According to an embodiment of the present disclosure, a method in which a *SidelinkDRXReconfiguration* message is used for the purpose of mutually exchanging/configuring configuration parameters necessary for performing a power saving mode operation between UEs is newly proposed.

In addition, in the present disclosure, a method in which a UE in PC5 Idle mode uses a *SidelinkDRXReconfiguration* message as a PC5 RRC message for the purpose of initiating PC5 active mode specific sidelink DRX configuration negotiation by transitioning to PC5 active mode is proposed. For example, *SidelinkDRXReconfiguration* message may include PC5 active mode specific sidelink DRX configuration generated by a UE initiating negotiation, or PC5 active mode specific sidelink DRX configuration previously obtained by the UE from a base station. For example, the *SidelinkDRXReconfiguration* message may be generated in a V2X layer of the UE. Also, for example, a *SidelinkDRXReconfiguration* message may also include identifier (e.g., PQI or PFI) information indicating QoS requirements (QoS parameters) for sidelink data (or sidelink service).

According to an embodiment of the present disclosure, a method for enabling a UE in PC5 active mode to transmit a *SidelinkDRXReconfiguration* message to a peer UE when transitioning to PC5 Idle mode is proposed. In this case, i.e. when a UE transitions from PC5 active mode to PC5 idle mode, a UE that has initiated transition from PC5 active mode to PC5 Idle mode may include PC5 Idle mode specific sidelink DRX configuration in a *SidelinkDRXReconfiguration* message and transmit it to a peer UE. For example, the Peer UE may include a UE that has established a PC5 unicast link with a UE that has initiated transition from PC5 active mode to PC5 idle mode and is performing sidelink DRX operation using PC5 active mode specific sidelink DRX configuration.

According to an embodiment of the present disclosure, the proposed message (*SidelinkDRXReconfiguration* message) can also be used for the purpose of exchanging a power saving mode operation parameter between UEs in the same power saving mode. For example, the power saving mode operating parameter may include a sidelink DRX configuration.

According to an embodiment of the present disclosure, The *SidelinkDRXReconfiguration* message may include elements described below.

For example, *SidelinkDRXReconfiguration* message may include a start of power saving mode. That is, *SidelinkDRXReconfiguration* message may indicate a start of a power saving mode initial operation. For example, if the start of the power save mode is 0, it may mean the start of the PC5 idle mode. For example, if the start of the power save mode is 1, it may mean the start of the PC5 active mode.

For example, *SidelinkDRXReconfiguration* message may include sidelink DRX configuration. For example, *SidelinkDRXReconfiguration* message may include sidelink DRX operation configuration information for each power saving mode. For example, the sidelink DRX operation configuration information for each power saving mode may include PC5 Idle mode specific sidelink DRX configuration and/or PC5 active mode specific sidelink DRX configuration.

For example, *SidelinkDRXReconfiguration* message may include "power saving mode switching" indication. For example, *SidelinkDRXReconfiguration* message may indicate switching (or reconfiguration) the current power saving mode operation. For example, when the power saving mode switching is 0, it may mean switching from the PC5 idle mode to the PC5 active mode. For example, when the power saving mode switching is 1, it may mean switching from the PC5 active mode to the PC5 idle mode.

For example, *SidelinkDRXReconfiguration* message may include "sidelink DRX reconfiguration" indication. For example, *SidelinkDRXReconfiguration* message may indicate reconfiguration or keeping sidelink DRX configuration information (i.e., maintaining current configuration). For example, if the sidelink DRX reconfiguration indication is 0, it may mean no change, that is, maintenance of the current configuration. For example, when the sidelink DRX reconfiguration indication is 1, it may mean reconfiguration of sidelink DRX configuration.

For example, *SidelinkDRXReconfiguration* message include an indication in "PC5 Unicast Link (and/or PC5 RRC connection)". For example, *SidelinkDRXReconfiguration* message may indicate establishment of PC5 Unicast Link (and/or PC5 RRC connection) and release of PC5 Unicast Link (and/or PC5 RRC connection). For example, if the indication in the PC5 unicast link is 0, it may mean establishment of a PC5 unicast link (and/or PC5 RRC connection). For example, when the indication in the PC5 unicast link is 1, it may mean release of the PC5 unicast link (and/or PC5 RRC connection).

### SidelinkDRXReconfigurationComplete message

According to an embodiment of the present disclosure, *SidelinkDRXReconfigurationComplete* message is defined as a response message for a *SidelinkDRXReconfiguration* message. For example, a UE receiving a *SidelinkDRXReconfiguration* message may determine whether to allow power saving mode operation (e.g., Sidelink DRX operation) using the power saving mode operation indication and the setting parameter for each power saving mode included in the *SidelinkDRXReconfiguration* message.

If, for example, a UE that has received a *SidelinkDRXReconfiguration* message accepts a power saving mode operation indication and a setting parameter included in the *SidelinkDRXReconfiguration* message, the UE may respond by including "accept" to the cause of the *SidelinkDRXReconfigurationComplete* message. For example, if not, that is, if the UE does not allow the power saving mode operation indication and a configuration parameter included in the *SidelinkDRXReconfigurationComplete* message, it may forward the *SidelinkDRXReconfigurationComplete* message to the peer UE by including "reject" in the cause.

According to an embodiment of the present disclosure, a method of transmitting a *SidelinkDRXReconfiguration* message to a peer UE when a UE in PC5 active mode transitions to PC5 Idle mode has been proposed. For example, upon receiving a *SidelinkDRXReconfiguration* message transmitted by a UE that has initiated transition from PC5 active mode to PC5 Idle mode, a UE may respond with a *SidelinkDRXReconfigurationComplete* message and then transition to PC5 Idle mode. In addition, the UE that has transitioned to PC5 Idle mode releases the PC5 unicast link and the PC5 RRC connection, and it may perform sidelink DRX operation in PC5 Idle mode using the PC5 Idle mode specific sidelink DRX configuration included in the received *SidelinkDRXReconfiguration* message.

According to an embodiment of the present disclosure, the proposed message (*SidelinkDRXReconfigurationComplete* message) may be used for the purpose of exchanging a power save mode operation parameter (e.g., a sidelink DRX configuration) between UEs in the same power save mode.

According to an embodiment of the present disclosure, *SidelinkDRXReconfigurationComplete* message may contain the elements described below.

For example, *SidelinkDRXReconfigurationComplete* message may include a cause. For example, when the cause is Accept, it may mean that a UE receiving a *Sidelink DRXReconfiguration* message accepts the use of the indication and configuration information included in the message. For example, if the cause is Reject, it may mean that a UE receiving the *SidelinkDRXReconfiguration* message rejects the use of the indication and configuration information included in the message.

According to an embodiment of the present disclosure, in parallel with PC5 active mode terminals (for example, terminals configured for PC5 unicast link and/or PC5 RRC connection) performing sidelink DRX operation by applying PC5 active mode specific sidelink DRX configuration, a method of performing a sidelink DRX operation by applying a default/common sidelink DRX configuration (used by UEs in PC5 Idle mode) is proposed.

For example, a sidelink DRX operation may include on-duration operation: sidelink data reception/transmission, off-duration operation: sleep mode operation after the on-duration expires. For example, there may be a need for a PC5 active mode UE to receive a signal of a UE that has not configured PC5 unicast link and/or PC5 RRC connection with the PC5 active mode UE itself, at the same time as performing sidelink communication with terminals for which PC5 unicast link and/or PC5 RRC connection have been established. Therefore, the PC5 active mode UE may need to perform sidelink DRX operation using default/common sidelink DRX configuration (configured for PC5 idle mode UE). That is, According to an embodiment of the present disclosure, a method of performing sidelink DRX operation by simultaneously applying PC5 active mode specific sidelink DRX configuration and default/common sidelink DRX configuration for PC5 idle mode UE by PC5 active mode UE is proposed.

According to an embodiment of the present disclosure, a method where a PC5 active mode specific sidelink DRX on-duration for PC5 active mode terminals includes PC5 idle mode specific sidelink DRX on-duration (or default/common sidelink on-duration included in default/common sidelink DRX configuration) for PC5 idle mode terminals is proposed.

### sidelink DRX operation

According to an embodiment of the present disclosure, sidelink DRX operation of a UE in PC5 active mode is defined as follows.

For example, UEs that include capabilities for sidelink communication and sidelink DRX operation, and have PC5 unicast links and PC5 RRC connections with peer UEs may use the PC5 active mode specific sidelink DRX configuration proposed in the present disclosure for sidelink DRX operation. That is, a UE in PC5 active mode can check a PC5 active mode specific sidelink DRX configuration and monitor a sidelink signal of neighboring UEs at the start of the sidelink DRX on-duration interval.

For example, in a period other than the sidelink DRX on-duration interval (e.g., sidelink DRX off-duration), a UE in PC5 active mode may operate in a sleep mode, thereby reducing power consumption. In addition, a UE in PC5 active mode wakes up in a DRX on-duration interval of the next sidelink DRX cycle and can monitor a sidelink signal of neighboring UEs.

For example, when the UE in PC5 active mode receives a sidelink signal from a neighboring UE in PC5 active mode specific sidelink DRX on-duration and determines that continuous sidelink message transmission/reception is no longer necessary, the UEs in PC5 active mode may exchange a PC5 RRC message described in proposal 2 with each other, release the PC5 unicast link (and/or PC5 RRC connection), and transition to the PC5 Idle mode. Also, for example, a UE that has transitioned to PC5 Idle mode can perform sidelink DRX operation using PC5 Idle mode specific sidelink DRX configuration included in a *SidelinkDRXReconfiguration* message. For example, The PC5 RRC message described in proposal 2 may include a SidelinkDRXRecnfiguration message and/or a *SidelinkDRXReconfigurationComplete* message.

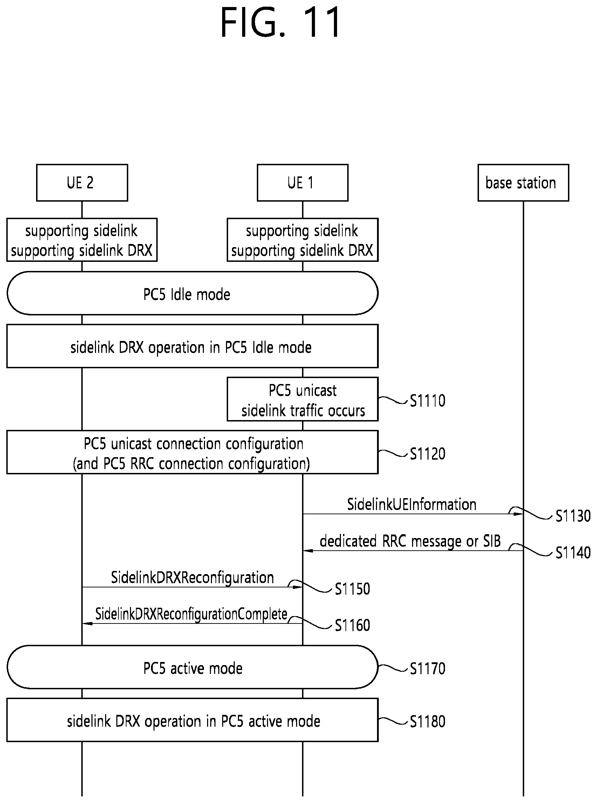

FIG. 11 shows a procedure for UE 1 and UE 2 to perform a sidelink DRX operation in PC5 active mode according to an embodiment of the present disclosure. The embodiment of FIG. 11 may be combined with various embodiments of the present disclosure.

For example, FIG. 11 may show an embodiment of a sidelink operation of UEs in PC5 active mode. Referring to FIG. 11, For example, UE 1 and/or UE 2 may support sidelink communication and sidelink DRX operation. For example, a default operation mode for sidelink communication of the UE 1 and/or the UE 2 may be PC5 Idle mode. For example, in this embodiment, the UE 1 and/or the UE 2 may start in PC5 Idle mode. Also, for example, the UE 1 and/or the UE 2 may perform sidelink DRX operation using PC5 Idle mode specific sidelink DRX configuration in PC5 Idle mode.

In step S1110, a sidelink traffic may occur in the UE 1 performing sidelink DRX operation in PC5 Idle mode. For example, the sidelink traffic may be sidelink traffic related to legitimate sidelink communication to be performed between the UE 1 and the UE 2. For example, after the sidelink traffic, sidelink data requiring unicast sidelink transmission may continue to occur.

In step S1120, the UE 1 may establish a PC5 unicast link and a PC5 RRC connection with the UE 2 in order to continuously transmit unicast sidelink data to the UE 2.

In step S1130, the UE 1 includes sidelink-related information in a *SidelinkUEInformation* message and transmits it to a base station. For example, the sidelink-related information may include frequency information on which sidelink communication is performed, QoS information for unicast sidelink data, sidelink capability information, and the like. For example, the sidelink capability information may include whether a sidelink DRX operation is supported and/or whether a sidelink HARQ operation is supported. For example, if there is a sidelink DRX configuration created by UE 1 itself, the UE 1 may include PC5 active mode specific sidelink DRX configuration in a *SidelinkUEInformation* message and transmit it to the base station. For example, the sidelink DRX configuration generated by the UE 1 itself may be a PC5 active mode specific sidelink DRX configuration generated based on the QoS of unicast sidelink data in a V2X layer.

In step S1140, the base station may transmit PC5 active mode specific sidelink DRX configuration information to the UE 1 based on sidelink information of the UE 1 included in the *SidelinkUEInformation* message received from the UE 1. For example, a PC5 active mode specific sidelink DRX configuration information transmitted by the base station to UE 1 may be different from a PC5 active mode specific sidelink DRX configuration information generated by the UE 1 itself. For example, when the UE 1 does not receive PC5 active mode specific sidelink DRX configuration information from the base station, the UE 1 uses the PC5 active mode specific sidelink DRX configuration generated by the UE 1 itself. For example, the base station may transmit the PC5 active mode specific sidelink DRX configuration information through a dedicated RRC message or SIB.

For example, the UE 1 may perform sidelink DRX operation in PC5 active mode using PC5 active mode specific sidelink DRX configuration information set by the base station or configured by itself. In step S1150, the UE 1 may transmit the PC5 active mode specific sidelink DRX configuration information received from the base station to the UE 2 in the *SidelinkDRXReconfiguration* message.

In step S1160, the UE 2 may receive an indication to transition to PC5 active mode through a *SidelinkDRXReconfiguration* message from the UE 1. In addition, the UE 2 may receive from the UE 1 PC5 active mode specific sidelink DRX configuration to be used in PC5 active mode. Also, for example, after the UE 2 receives the *SidelinkDRXReconfiguration* message, when the UE 2 accepts the PC5 active mode operation indication included in the *SidelinkDRXReconfiguration* message and the use of the PC5 active mode specific sidelink DRX configuration, the UE 2 may respond to the UE 1 by including "Accept" in the cause of the *SidelinkDRXReconfigurationComplete* message. Alternatively, after the UE 2 receives the *SidelinkDRXReconfiguration* message, if the UE 2 does not accept the use of the PC5 active mode operation indication and PC5 active mode specific sidelink DRX configuration included in the *SidelinkDRXReconfiguration* message (that is, if a PC5 active mode operation is not permitted and the use of PC5 active mode specific sidelink DRX configuration is not permitted), the UE2 may transmit a *SidelinkDRXReconfigurationComplete* message to the UE 1 by including "reject" in the cause.

In step S1170, the UE 1 and/or the UE 2 may perform a sidelink DRX operation using a PC5 active mode specific sidelink DRX configuration by transitioning the power saving mode from PC5 idle mode to PC5 active mode. In the above-described embodiment, it has been described that the power saving mode can transition from the PC5 Idle mode to the PC5 active mode after the UE 1 and/or the UE 2 exchange the *SidelinkDRXReconfiguration* message and the *SidelinkDRXReconfigurationComplete* message. On the other hand, for example, in other embodiment, a method where after the UE 1 and/or the UE 2 establishes the PC5 unicast link and the PC5 RRC connection, immediately transition to PC5 active mode, mutually exchange *SidelinkDRXReconfiguration* message and *SidelinkDRXReconfigurationComplete* message, and perform a PC5 active mode specific sidelink DRX operation by applying a PC5 active mode specific sidelink DRX configuration may be supported.

### Proposal 3.

According to an embodiment of the present disclosure, a method for performing a transition operation between PC5 idle mode and PC5 active mode by UEs supporting power saving mode operation is proposed.

According to an embodiment of the present disclosure, a switching operation of power saving mode between UEs is also proposed. In proposal 2 of the present disclosure, a power saving mode switching operation from PC5 idle mode to PC5 active mode between UEs is proposed.

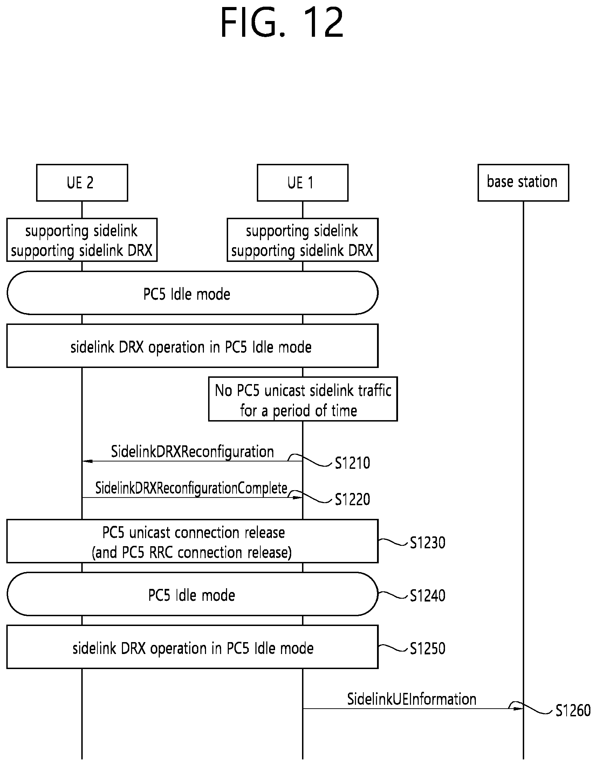

FIG. 12 shows a procedure in which UE 1 and UE 2 switch power saving modes from PC5 active mode to PC5 idle mode according to an embodiment of the present disclosure. The embodiment of FIG. 12 may be combined with various embodiments of the present disclosure.

For example, FIG. 12 may show a power saving mode switching operation from PC5 active mode to PC5 idle mode. Referring to FIG. 12, UE 1 and UE 2 may perform sidelink DRX operation by applying PC5 active mode specific sidelink DRX configuration in PC5 active mode. For example, there may be no unicast sidelink data between UE 1 and a peer UE (e.g., UE 2) that has established a PC5 unicast link with UE 1. At this time, the UE 1 may initiate a power saving mode transition to PC5 Idle mode.

In step S1210, the UE 1 may include a power saving mode switching indication in a *SidelinkDRXReconfiguration* message and transmit it to the UE 2. For example, the power saving mode switching may be switching from PC5 active mode to PC5 idle mode. For example, PC5 Idle mode specific sidelink DRX configuration information may be included in the *SidelinkDRXReconfiguration* message. For example, the PC5 Idle mode specific sidelink DRX configuration information may include PC5 Idle mode specific sidelink DRX configuration generated by a V2X layer of the UE or PC5 Idle mode specific sidelink DRX configuration that UE 1 has previously received and maintained from a base station.

For example, the UE 2 receiving an indication to transition to PC5 Idle mode by receiving the *SidelinkDRXReconfiguration* message from UE 1 may receive from UE 1 PC5 Idle mode specific sidelink DRX configuration to be used in PC5 Idle mode. In step S1220, after receiving a *SidelinkDRXReconfiguration* message, when the UE 2 accepts the PC5 Idle mode operation indication included in the *SidelinkDRXReconfiguration* message and the use of the PC5 Idle mode specific sidelink DRX configuration, the UE 2 may respond to the UE 1 by including "Accept" in the cause of the *SidelinkDRXReconfigurationComplete* message. On the other hand, for example, if the UE 2 does not allow the PC5 Idle mode operation indication included in the *SidelinkDRXReconfiguration* message and the use of the PC5 Idle mode specific sidelink DRX configuration, the UE 2 may transmit a *SidelinkDRXReconfigurationComplete* message to the UE 1 by including "reject" in the cause.

In step S1240, the UE 1 and/or the UE 2 may release the PC5 unicast link (and the PC5 RRC connection) and transition the power saving mode to the PC5 idle mode. According to another embodiment, the UE 1 and/or the UE 2 may release the PC5 unicast link (and the PC5 RRC connection) after transitioning to the PC5 Idle mode.

In step S1250, the UE 1 and/or the UE 2 may perform a sidelink DRX operation by applying a PC5 Idle mode specific sidelink DRX configuration after transitioning the power saving mode from the PC5 active mode to the PC5 Idle mode.

In step S1260, the UE 1 may include the change of power saving mode in a *SidelinkUEInformation* message and transmit the information to a base station. For example, the *SidelinkUEInformation* message may also include identifier information (Layer 2 ID) of the previous PC5 unicast peer UE (e.g., UE 2). For example, the peer UE may include a peer UE that has operated in the PC5 active mode by establishing a PC5 unicast link with the UE 1 before transitioning to the PC5 idle mode.

For example, the on-duration term mentioned in the proposal of the present disclosure may be extended and interpreted as an active time interval. For example, the active time may include a period in which a radio signal is received/transmitted in an awake state (ie, an RF module is "On"). In addition, whether or not the (part of) proposed methods/rules of the present disclosure are applied and/or related parameters (e.g., threshold values) may be configured specifically (or, differently, or independently) based on a resource pool, congestion level, service priority, service type, service requirement, and/or sidelink transmission resource allocation mode (e.g., mode 1, mode 2), etc. For example, the service requirements may include latency, reliability, and traffic type (e.g., (a) periodic generation).

According to various embodiments of the present disclosure, a power saving operation of a UE supporting sidelink communication has been proposed, and power consumption of the UE during sidelink communication can be reduced based on the power saving operation.

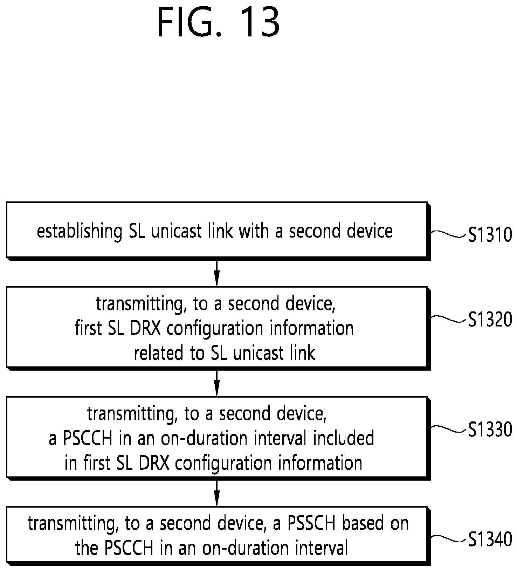

FIG. 13 shows a procedure for performing wireless communication by a first device according to an embodiment of the present disclosure. The embodiment of FIG. 13 may be combined with various embodiments of the present disclosure.

Referring to FIG. 13, in step S1310, a first device may establish a sidelink, SL, unicast link with a second device. In step S1320, the first device may transmit, to the second device, first SL discontinuous reception, DRX, configuration information related to the SL unicast link. In step S1330, the first device may transmit, to the second device, a physical sidelink control channel, PSCCH, in an on-duration interval included in the first SL DRX configuration information. In step S1340, the first device may transmit, to the second device, a physical sidelink shared channel, PSSCH, based on the PSCCH in the on-duration interval. For example, the first SL DRX configuration information is configured for each SL unicast link.

For example, additionally, the first device may transmit, to a base station, SL UE information.

For example, the SL UE information includes second SL DRX configuration information configured from the first device.

For example, additionally, the first device may receive, from the base station, the first SL DRX configuration information. For example, the first SL DRX configuration information may be configured based on the SL UE information.

For example, the first SL DRX configuration information is the same as the second SL DRX configuration information, based on the first device failing to receive the first SL DRX configuration information from the base station.

For example, the SL UE information may include at least one of frequency related to the SL unicast link, quality of service, QoS, information related to the PSSCH, information related to whether to SL DRX operation is supported, or information related to whether SL hybrid automatic repeat request, HARQ, operation is supported.

For example, a DRX operation performed from the second device may be performed based on the first SL DRX configuration information.

For example, the DRX operation may be performed based on the second device in PC5 active mode.

For example, additionally, the first device may indicate, to the second device, to transition to the PC5 active mode through an SL DRX reconfiguration message. For example, the first device and the second device transition to the PC5 active mode, based on the SL DRX reconfiguration message.

For example, the first device and the second device may transition to the PC5 active mode, based on the establishment of the SL unicast link.

For example, additionally, the first device may receive, from the second device, second SL DRX configuration information; and perform a DRX operation based on the second SL DRX configuration information.

For example, the first SL DRX configuration information may be transmitted to the second device through an SL DRX reconfiguration message.

For example, the PSCCH and the PSSCH may be transmitted based on the first device in PC5 active mode.

The above-described embodiment may be applied to various devices described below. For example, a processor 102 of a first device 100 may establish a sidelink, SL, unicast link with a second device 200. And, the processor 102 of the first device 100 may control a transceiver 106 to transmit, to the second device 200, first SL discontinuous reception, DRX, configuration information related to the SL unicast link. And, the processor 102 of the first device 100 may control the transceiver 106 to transmit, to the second device 200, a physical sidelink control channel, PSCCH, in an on-duration interval included in the first SL DRX configuration information. And, the processor 102 of the first device 100 may control the transceiver 106 to transmit, to the second device 200, a physical sidelink shared channel, PSSCH, based on the PSCCH in the on-duration interval. For example, the first SL DRX configuration information is configured for each SL unicast link.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: establish a sidelink, SL, unicast link with a second device; transmit, to the second device, first SL discontinuous reception, DRX, configuration information related to the SL unicast link; transmit, to the second device, a physical sidelink control channel, PSCCH, in an on-duration interval included in the first SL DRX configuration information; and transmit, to the second device, a physical sidelink shared channel, PSSCH, based on the PSCCH in the on-duration interval, wherein the first SL DRX configuration information may be configured for each SL unicast link.

According to an embodiment of the present disclosure, A device adapted to control a first user equipment, UE, may be proposed. For example, the device may comprise: one or more processors; and one or more memories operably connectable to the one or more processors and storing instructions. For example, the one or more processors may execute the instructions to: establish a sidelink, SL, unicast link with a second UE; transmit, to the second UE, first SL discontinuous reception, DRX, configuration information related to the SL unicast link; transmit, to the second UE, a physical sidelink control channel, PSCCH, in an on-duration interval included in the first SL DRX configuration information; and transmit, to the second UE, a physical sidelink shared channel, PSSCH, based on the PSCCH in the on-duration interval, wherein the first SL DRX configuration information may be configured for each SL unicast link.

According to an embodiment of the present disclosure, a non-transitory computer-readable storage medium storing instructions may be proposed. For example, the instructions, when executed, may cause a first device to: establish a sidelink, SL, unicast link with a second device; transmit, to the second device, first SL discontinuous reception, DRX, configuration information related to the SL unicast link; transmit, to the second device, a physical sidelink control channel, PSCCH, in an on-duration interval included in the first SL DRX configuration information; and transmit, to the second device, a physical sidelink shared channel, PSSCH, based on the PSCCH in the on-duration interval, wherein the first SL DRX configuration information may be configured for each SL unicast link.

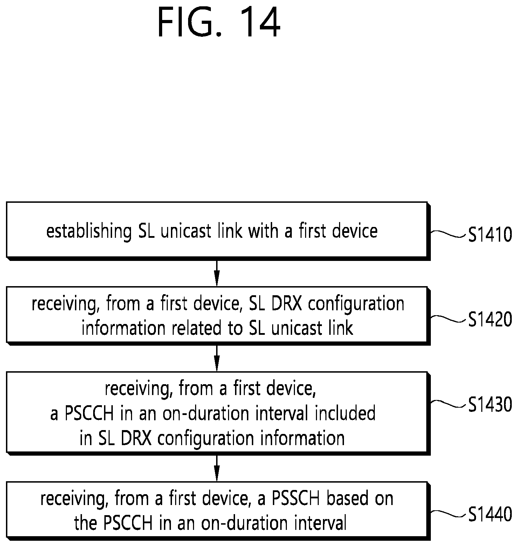

FIG. 14 shows a procedure for a second device to perform wireless communication according to an embodiment of the present disclosure. The embodiment of FIG. 14 may be combined with various embodiments of the present disclosure.

Referring to FIG. 14, in step S1410, a second device may establish a sidelink, SL, unicast link with a first device. In step S1420, the second device may receive, from the first device, SL discontinuous reception, DRX, configuration information related to the SL unicast link. In step S1430, the second device may receive, from the first device, a physical sidelink control channel, PSCCH, in an on-duration interval included in the SL DRX configuration information. In step S1440, the second device may receive, from the first device, a physical sidelink shared channel, PSSCH, based on the PSCCH in the on-duration interval, wherein the SL DRX configuration information may be configured for each SL unicast link.

For example, additionally, the second device may receive, from the first device, an SL DRX reconfiguration message; and transition to PC5 active mode based on the SL DRX reconfiguration message. For example, the SL DRX configuration information may be received through the SL DRX reconfiguration message, and the PSCCH and the PSSCH may be received based on the second device in the PC5 active mode.

The above-described embodiment may be applied to various devices described below. For example, a processor 202 of a second device 200 may establish a sidelink, SL, unicast link with a first device 100. And, the processor 202 of the second device 200 may control a transceiver 206 to receive, from the first device 100, SL discontinuous reception, DRX, configuration information related to the SL unicast link. And, the processor 202 of the second device 200 may control the transceiver 206 to receive, from the first device 100, a physical sidelink control channel, PSCCH, in an on-duration interval included in the SL DRX configuration information. And, the processor 202 of the second device 200 may control the transceiver 206 to receive, from the first device 100, a physical sidelink shared channel, PSSCH, based on the PSCCH in the on-duration interval, wherein the SL DRX configuration information may be configured for each SL unicast link.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: establishing a sidelink, SL, unicast link with a first device; receive, from the first device, SL discontinuous reception, DRX, configuration information related to the SL unicast link; receive, from the first device, a physical sidelink control channel, PSCCH, in an on-duration interval included in the SL DRX configuration information; and receive, from the first device, a physical sidelink shared channel, PSSCH, based on the PSCCH in the on-duration interval, wherein the SL DRX configuration information may be configured for each SL unicast link.

For example, additionally, the one or more processors may execute the instructions to: receive, from the first device, an SL DRX reconfiguration message; and transition to PC5 active mode based on the SL DRX reconfiguration message. For example, the SL DRX configuration information may be received through the SL DRX reconfiguration message, and the PSCCH and the PSSCH may be received based on the second device in the PC5 active mode.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

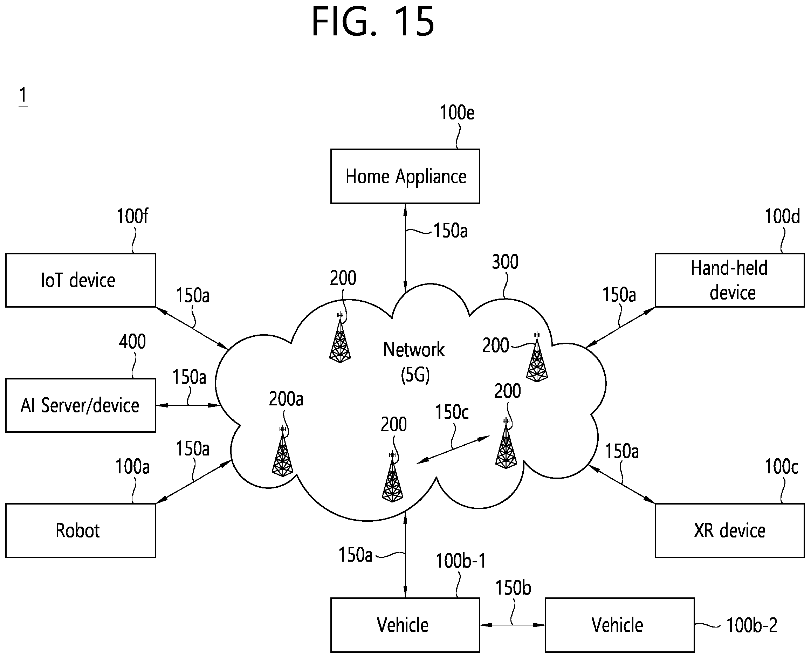

FIG. 15 shows a communication system 1, based on an embodiment of the present disclosure. The embodiment of FIG. 15 may be combined with various embodiments of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

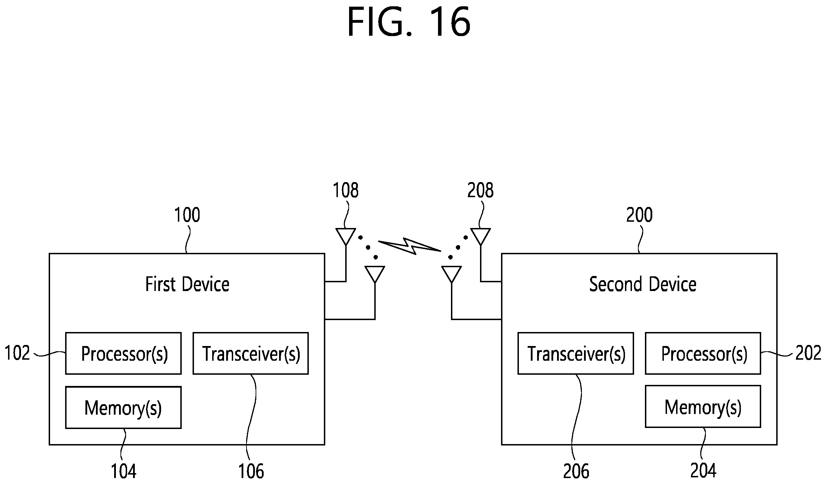

FIG. 16 shows wireless devices, based on an embodiment of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

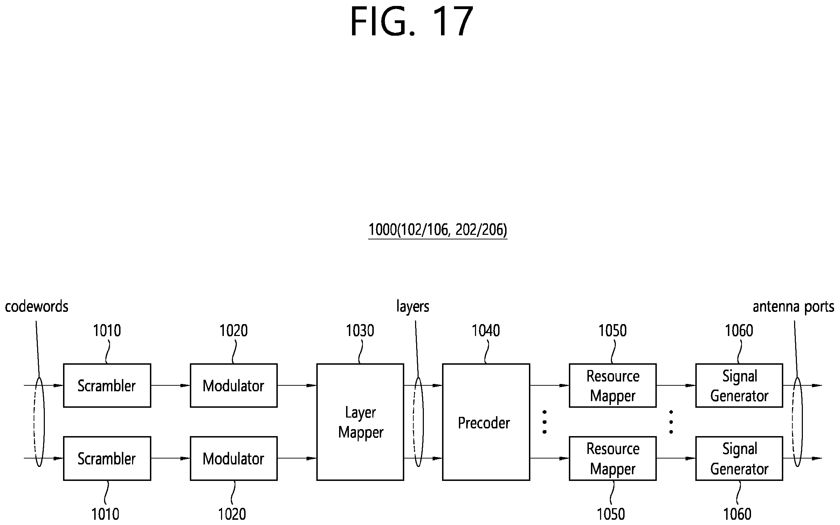

FIG. 17 shows a signal process circuit for a transmission signal, based on an embodiment of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

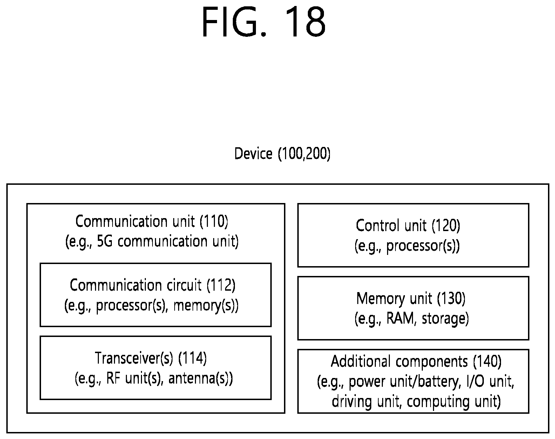

FIG. 18 shows another example of a wireless device, based on an embodiment of the present disclosure. The wireless device may be implemented in various forms according to a use-case/service (refer to FIG. 15).

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

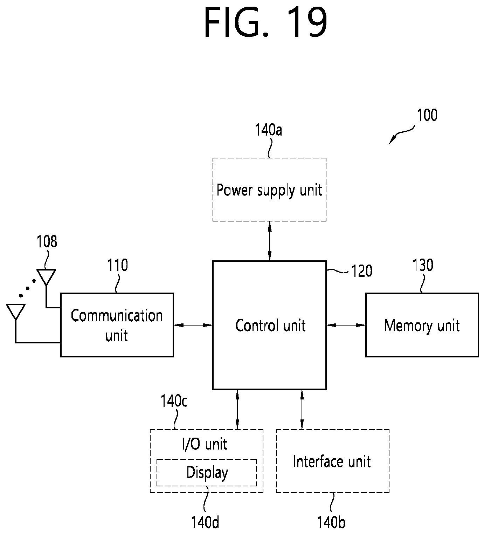

FIG. 19 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

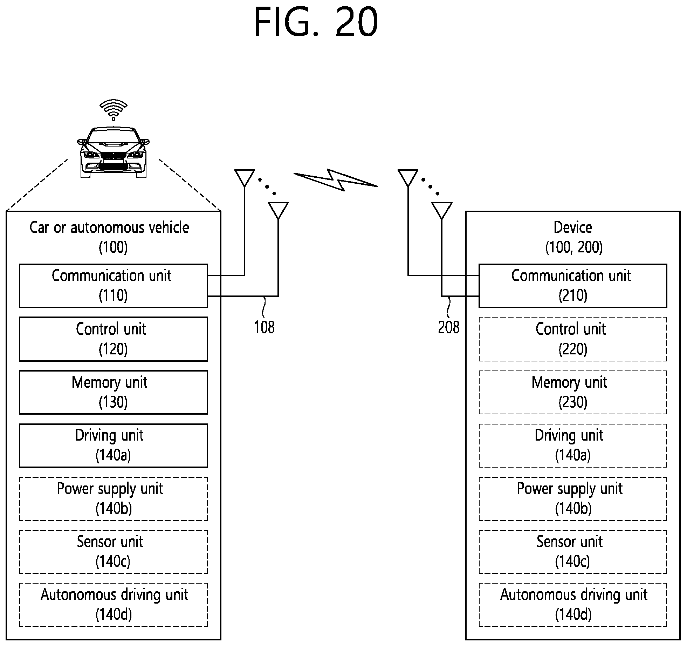

FIG. 20 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information regarding a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

## Claims

1. A method for performing, by a first device, wireless communication, the method comprising:
establishing (S1120) a sidelink, SL, unicast link with a second device;
generating (S1140) an SL discontinuous reception, DRX, configuration information, based on the first device failing to receive any SL DRX configuration information from a base station;
transmitting (S1150), to the second device, the SL DRX configuration information;
transmitting (S1170), to the second device, a physical sidelink control channel, PSCCH, within an on-duration interval included in the SL DRX configuration information; and
transmitting, to the second device, a physical sidelink shared channel, PSSCH, based on the PSCCH within the on-duration interval,
wherein a DRX operation performed from the second device is performed based on the SL DRX configuration information.

2. The method of claim 1, wherein the DRX operation is performed based on the second device in PC5 active mode.

3. The method of claim 2, further comprising:
indicating (S1160), to the second device, to transition to the PC5 active mode through an SL DRX reconfiguration message,
wherein the first device and the second device transition to the PC5 active mode, based on the SL DRX reconfiguration message.

4. The method of claim 1, wherein the PSCCH and the PSSCH are transmitted based on the first device in PC5 active mode.

5. A first device (100) for performing wireless communication, the first device (100) comprising:
one or more memories (104) storing instructions;
one or more transceivers (106); and
one or more processors (102) connected to the one or more memories (104) and the one or more transceivers (106), wherein the one or more processors (102) execute the instructions to:
establish a sidelink, SL, unicast link with a second device (200);
generate an SL discontinuous reception, DRX, configuration information, based on the first device failing to receive any SL DRX configuration information from a base station;
transmit, to the second device (200), the SL DRX configuration information;
transmit, to the second device (200), a physical sidelink control channel, PSCCH, within an on-duration interval included in the SL DRX configuration information; and
transmit, to the second device (200), a physical sidelink shared channel, PSSCH, based on the PSCCH within the on-duration interval,
wherein a DRX operation performed from the second device is performed based on the SL DRX configuration information.

6. A second device (200) comprising:
one or more processors (202); and
one or more memories (204) operably connectable to the one or more processors (202) and storing instructions, wherein the one or more processors (202) execute the instructions to:
establish a sidelink, SL, unicast link with a first device (100);
receive, from the first device, a SL discontinuous reception, DRX, configuration information which the first device generates based on the first device failing to receive any SL DRX configuration information from a base station;
receive, from the first device, a physical sidelink control channel, PSCCH, within an on-duration interval included in the SL DRX configuration information; and
receive, from the first device, a physical sidelink shared channel, PSSCH, based on the PSCCH within the on-duration interval,
wherein a DRX operation performed from the second device is performed based on the SL DRX configuration information.

## Patentansprüche

1. Verfahren zum Durchführen einer Drahtloskommunikation durch eine erste Vorrichtung, wobei das Verfahren umfasst:
Herstellen (S1120) einer Sidelink-, SL-, Unicast-Verbindung mit einer zweiten Vorrichtung;
Erzeugen (S1140) von SL-Konfigurationsinformationen für diskontinuierlichen Empfang, DRX, basierend darauf, dass die erste Vorrichtung daran scheitert, irgendwelche SL-DRX-Konfigurationsinformationen von einer Basisstation zu empfangen;
Senden (S1150) der SL-DRX-Konfigurationsinformationen an die zweite Vorrichtung;
Senden (S1170) eines physischen Sidelink-Steuerkanals, PSCCH, an die zweite Vorrichtung innerhalb eines in den SL-DRX-Konfigurationsinformationen enthaltenen Einschaltintervalls; und
Senden eines gemeinsamen physischen Sidelink-Kanals, PSSCH, basierend auf dem PSCCH innerhalb des Einschaltintervalls an die zweite Vorrichtung,
wobei ein von der zweiten Vorrichtung durchgeführter DRX-Vorgang basierend auf den SL-DRX-Konfigurationsinformationen durchgeführt wird.

2. Verfahren nach Anspruch 1, wobei der DRX-Vorgang basierend darauf, dass sich die zweite Vorrichtung im PC5-Aktivmodus befindet, durchgeführt wird.

3. Verfahren nach Anspruch 2, ferner umfassend:
Angeben (S1160) an die zweite Vorrichtung, in den PC5-Aktivmodus zu wechseln, durch eine SL-DRX-Neukonfigurationsnachricht,
wobei die erste Vorrichtung und die zweite Vorrichtung basierend auf der SL-DRX-Neukonfigurationsnachricht in den PC5-Aktivmodus wechseln.

4. Verfahren nach Anspruch 1, wobei der PSCCH und der PSSCH basierend darauf, dass sich die erste Vorrichtung im PC5-Aktivmodus befindet, gesendet werden.

5. Erste Vorrichtung (100) zum Durchführen einer Drahtloskommunikation, wobei die erste Vorrichtung (100) Folgendes umfasst:
einen oder mehrere Speicher (104), die Anweisungen speichern;
einen oder mehrere Transceiver (106); und
einen oder mehrere Prozessoren (102), die mit dem einen oder den mehreren Speichern (104) und dem einen oder den mehreren Transceivern (106) verbunden sind, wobei der eine oder die mehreren Prozessoren (102) die folgenden Anweisungen ausführen:
Herstellen einer Sidelink-, SL-, Unicast-Verbindung mit einer zweiten Vorrichtung (200);
Erzeugen von SL-Konfigurationsinformationen für diskontinuierlichen Empfang, DRX, basierend darauf, dass die erste Vorrichtung daran scheitert, irgendwelche SL-DRX-Konfigurationsinformationen von einer Basisstation zu empfangen;
Senden der SL-DRX-Konfigurationsinformationen an die zweite Vorrichtung (200);
Senden eines physischen Sidelink-Steuerkanals, PSCCH, an die zweite Vorrichtung (200) innerhalb eines in den SL-DRX-Konfigurationsinformationen enthaltenen Einschaltintervalls; und
Senden eines gemeinsamen physischen Sidelink-Kanals, PSSCH, an die zweite Vorrichtung (200) basierend auf dem PSCCH innerhalb des Einschaltintervalls,
wobei ein von der zweiten Vorrichtung durchgeführter DRX-Vorgang basierend auf den SL-DRX-Konfigurationsinformationen durchgeführt wird.

6. Zweite Vorrichtung (200), umfassend:
einen oder mehrere Prozessoren (202); und
einen oder mehrere Speicher (204), die betriebsmäßig mit dem einen oder den mehreren Prozessoren (202) verbindbar sind und Anweisungen speichern, wobei der eine oder die mehreren Prozessoren (202) die folgenden Anweisungen ausführen:
Herstellen einer Sidelink-, SL-, Unicast-Verbindung mit einer ersten Vorrichtung (100);
Empfangen von SL-Konfigurationsinformationen für diskontinuierlichen Empfang, DRX, die die erste Vorrichtung basierend darauf erzeugt, dass die erste Vorrichtung daran scheitert, irgendwelche SL-DRX-Konfigurationsinformationen von einer Basisstation zu empfangen, von der ersten Vorrichtung;
Empfangen eines physischen Sidelink-Steuerkanals, PSCCH, von der ersten Vorrichtung innerhalb eines in den SL-DRX-Konfigurationsinformationen enthaltenen Einschaltintervalls; und
Empfangen eines gemeinsamen physischen Sidelink-Kanals, PSSCH, von der ersten Vorrichtung basierend auf dem PSCCH innerhalb des Einschaltintervalls,
wobei ein von der zweiten Vorrichtung durchgeführter DRX-Vorgang basierend auf den SL-DRX-Konfigurationsinformationen durchgeführt wird.

## Revendications

1. Procédé pour établir, par un premier dispositif, une communication sans fil, le procédé comprenant:
l'établissement (S1120) d'une liaison latérale, SL, d'une liaison de diffusion individuelle avec un deuxième dispositif;
la génération (S1140) d'informations de configuration de réception discontinue, DRX, de SL étant donné que le premier dispositif n'est pas parvenu à recevoir des quelconques informations de configuration SL DRX provenant d'une station de base;
la transmission (S1150), au deuxième dispositif, les informations de configuration SL DRX;
la transmission (S1170), au deuxième dispositif, d'un canal physique de commande de liaison latérale, PSCCH, dans un intervalle de durée de marche inclus dans les informations de configuration SL DRX; et
la transmission, au deuxième dispositif, d'un canal physique de liaison latérale partagé, PSSCH, sur la base du PSCCH dans l'intervalle de durée de marche,
dans lequel une opération DRX effectuée par le deuxième dispositif est effectuée en fonction des informations de configuration SL DRX.

2. Procédé selon la revendication 1, dans lequel l'opération DRX est effectuée sur la base du deuxième dispositif en mode actif PC5.

3. Procédé selon la revendication 2, comprenant en outre:
l'indication (S1160), au deuxième dispositif, qui consiste à passer en mode actif PC5 par le biais d'un message de reconfiguration SL DRX,
dans lequel le premier dispositif et le deuxième dispositif passent en mode actif PCS, sur la base du message de reconfiguration SL DRX.

4. Procédé selon la revendication 1, dans lequel le PSCCH et le PSSCH sont transmis sur la base du premier dispositif qui est en mode actif PC5.

5. Premier dispositif (100) permettant d'établir une communication sans fil, le premier dispositif (100) comprenant:
une ou plusieurs mémoires (104) stockant des instructions;
un ou plusieurs émetteurs-récepteurs (106); et
un ou plusieurs processeurs (102) connectés à la ou les mémoires (104) et au(x) émetteur(s)-récepteur(s) (106), dans lequel le ou les processeurs (102) exécutent les instructions pour:
établir une liaison latérale, SL, une liaison de diffusion individuelle avec un deuxième dispositif (200);
générer des informations de configuration de réception discontinue, DRX, de SL étant donné que le premier dispositif n'est pas parvenu à recevoir des quelconques informations de configuration SL DRX provenant d'une station de base;
transmettre, au deuxième dispositif (200), les informations de configuration SL DRX;
transmettre, au deuxième dispositif (200), un canal physique de commande de liaison latérale, PSCCH, dans un intervalle de durée de marche inclus dans les informations de configuration SL DRX; et
transmettre, au deuxième dispositif (200), un canal physique partagé de liaison latérale, PSSCH, sur la base du PSCCH dans l'intervalle de durée de marche,
dans lequel une opération DRX effectuée par le deuxième dispositif est effectuée en fonction des informations de configuration SL DRX.

6. Deuxième dispositif (200) comprenant:
un ou plusieurs processeurs (202); et
une ou plusieurs mémoires (204) pouvant être connectées fonctionnellement au(x) processeurs (202) et stockant des instructions, dans lequel le ou les processeurs (202) exécutent les instructions pour:
établir une liaison latérale, SL, une liaison de diffusion individuelle avec un premier dispositif (100);
recevoir, en provenance du premier dispositif, des informations de configuration de réception discontinue, DRX, de SL que le premier dispositif génère étant donné que le premier dispositif n'est pas parvenu à recevoir des quelconques informations de configuration SL DRX provenant d'une station de base;
recevoir, en provenance du premier dispositif, un canal physique de commande de liaison latérale, PSCCH, dans un intervalle de durée de marche inclus dans les informations de configuration SL DRX; et
recevoir, en provenance du premier dispositif, un canal physique partagé de liaison latérale, PSSCH, sur la base du PSCCH dans l'intervalle de durée de marche, dans lequel une opération DRX effectuée par le deuxième dispositif est effectuée en fonction des informations de configuration SL DRX.
